(19) Europäisches Patentamt
European Patent Office
Office européen des brevets

(11) Veröffentlichungsnummer: **0 533 026 A2**

# (12) EUROPÄISCHE PATENTANMELDUNG

(21) Anmeldenummer: **92115318.5**

(22) Anmeldetag: **08.09.92**

(51) Int. Cl.5: **C09D 133/12**, //(C09D133/12, 177:00)

(30) Priorität: **17.09.91 DE 4130834**

(43) Veröffentlichungstag der Anmeldung:
**24.03.93 Patentblatt 93/12**

(84) Benannte Vertragsstaaten:
**AT BE CH DE ES FR GB IT LI NL**

(71) Anmelder: **RÖHM GMBH**
**Kirschenallee**
**W-6100 Darmstadt(DE)**

(72) Erfinder: **Büchse, Joachim**
**Ketteler Strasse 13**
**W-6097 Trebur(DE)**
Erfinder: **Ouis, Peter, Dr.**
**Pfannmüllerweg 26**
**W-6100 Darmstadt(DE)**
Erfinder: **Steinmetz, Susanne**
**Schöneweibergasse 46**
**W-6103 Griesheim(DE)**

(54) **Plastisol-Systeme mit verbesserter Haftung.**

(57) Die Erfindung betrifft Plastisolsysteme mit verbesserter Haftung auf Kataphoreseblech auf Basis von Polyalkyl(meth)acrylaten, wobei als gelierfähige Massen Copolymerisate CP mit einer Glastemperatur Tg oberhalb 35 Grad C, mit einem Polymerisationsgrad von mehr als 400, und einer durchschnittlichen Korngröße von 0,05 bis 500 µm, die aus Methylmethacrylat sowie 0,1 bis 10 Gew.-% (bezogen auf die Gesamtheit der Monomeren) mindestens eines carboxylgruppenhaltigen Monomeren der Formel I

R - COOH I

worin
R für einen Rest

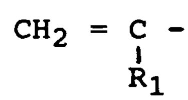

wobei $R_1$ Wasserstoff oder Methyl bedeutet oder für einen Rest

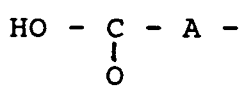

wobei A einen mindestens eine zur Carboxylgruppe α-ständige Doppelbindung enthaltendem Kohlenwasserstoffrest mit 2 bis 12 Kohlenstoffatomen darstellt, und/oder eines Anhydrids der Formel IA

EP 0 533 026 A2

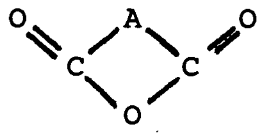

IA

aufgebaut sind,
gemeinsam mit 2,5 bis 10 Gew.-% (bezogen auf das Copolymerisat CP) an einem oder mehreren Polyamidharzen PAA zusammen mit 100 - 1 000 Gew.-Teilen bezogen auf 100 Gew.-Teile des Copolymerisats CP eines mit den Copolymerisaten verträglichen, organischen Weichmachers W und gegebenenfalls bis zu 700 Gew.-Teilen inerter Füllstoffe sowie gegebenenfalls weitere, übliche Zusätze, enthalten.

## Gebiet der Erfindung

Die Erfindung betrifft Plastisol-Systeme mit verbesserter Haftung insbesondere auf Kataphoreseblechen auf Basis von Polyalkylmethacrylaten (sog. PMMA-Plastisole).

## Stand der Technik

Über längere Zeit hin haben Beschichtungen und Beläge aus Polyvinylchlorid (PVC) auf dem Markt aufgrund ihrer vielseitigen Anwendbarkeit und ihrer guten Gebrauchseigenschaften eine überragende Rolle gespielt. Dispersionen von PVC-Pulvern in Weichmachungsmitteln, sogenannte Plastisole, meist unter Zusatz von Stabilisatoren und ggfls. von Pigmenten werden in größerem Umfang zur Beschichtung insbesondere im Heißtauchverfahren angewendet beispielsweise zum Korrosionsschutz von Metallen, zur Ausrüstung von Textilien und Ledern, für Schaumstoffe, Klebstoffe u.ä. (Vgl. Sarvetnik, Plastisols and Organosols, Van Nostrand, New York 1972; W. Becker u. D. Braun Kunststoff-Handbuch (Neuausgabe) Bd. 2/2, S. 1077ff, Hanser Verlag 1986). Aus der DE-A 26 54 871 ist ein Verfahren zur Herstellung von Überzügen und Klebeverbindungen für Werkstoffe auf Basis von PVC-Plastisolen bekannt, das dadurch gekennzeichnet ist, daß man als Haftvermittler Kondensationsprodukte, hergestellt aus:

A) einem polymerisierten Fettsäuregemisch mit einem erhöhten Anteil an tri- und höherpolymerisierten Fettsäuren (X) und aus

B) einem Überschuß an Polyalkylenpolyaminen,

welche einen Imidazolingehalt (Y) aufweisen, in Anteilen von 0,5 bis 5 Gew.-%, bezogen auf Plastisolformulierung, zusetzt und bei Temperaturen ab 90 Grad C einbrennt, wobei, wenn einer der Werte von X oder Y die 40 %-Grenze unterschreitet, der Wert der anderen Komponente zur Erzielung eines deutlichen Effekts mindestens 40 + Z (wobei Z die Differenz des kleineren Wertes zu 40 ist), vorzugsweise jedoch 40 + 2Z betragen sollte.

Eine weitere Ausgestaltung des Verfahrens gemäß der DE-A 26 54 871 stellt die DE-A 26 42 514 dar. Danach verwendet man als Haftvermittler

A) Schiffsche Basen mit 0,1 bis 1,4 Azomethingruppen/100 g Verbindung und/oder

B) Enamine mit 0,1 bis 1,4 Enamingruppen/100 g Verbindung,

allein oder im Gemisch, in Mengen von 0,1 bis 4,0 Gewichtsprozent, bezogen auf die Polyvinylchloridformulierung, und zusätzlich

C) 20 - 80 Gew.-%, bezogen auf das Gemisch von A, B, C, an Epoxidharzen.

In jüngster Zeit zeichnet sich die Tendenz ab, das PVC durch andere Werkstoffe zu substituieren. Bei allen derartigen Bemühungen hatte jedoch zu gelten, daß die Praxis nicht bereit war, drastische Abstriche an der Qualität hinzunehmen, die man von PVC-Produkten gewohnt war.

Auf einigen Sektoren wie z.B. der Beschichtung von Metallen konnten Plastisole auf Poly(meth)acrylatbasis erfolgreich Fuß fassen (sogenannte PAMA-Plastisole vgl. DE-C 25 43 542, DE-C 31 39 090, bzw. US-A 4 558 084, DE-C 27 22 752, DE-C 24 54 235). In der US-A 4 558 084 wird ein Plastisol auf Basis eines Copolymerisats aus Methylmethacrylat und Itaconsäure bzw. Itaconsäureanhydrid beschrieben, dem eine ausreichende Haftung auf elektrophoretisch vorbehandelten Metalloberflächen attestiert wird.

In jüngerer Zeit sind Bodenbeläge auf Basis von PAMA-Plastisolen vorgeschlagen worden, bei denen ein reines Polymethylmethacrylat (PMMA) zur Verwendung kommt, das teils als Emulsions- bzw. Sprühpolymerisat, teils als Suspensionspolymerisat eingesetzt wird (DE-C 39 03 669).

## Aufgabe und Lösung

Die Haftung von PVC-Plastisolen nach dem Gelieren insbesondere auf katophoretisch beschichteten Eisenblechen läßt sich wie seit längerem bekannt durch die Anwendung von Polyamidharzen (Polyaminoamiden) als Haftvermittler drastisch verbessern (vgl. DE-A 25 12 366, DE-A 26 54 871, DE-A 26 42 514, Ullmann's Encyclopädie der Techn. Chemie, 4. Auflage, Bd. 12, 552 - 555, Verlag Chemie 1976, D.E. Floyd, Polyamide Resins, Reinhold, New York; Vieweg-Krekeler, Kunststoff-Handbuch Bd. VI, Polyamide 387 - 392, Hanser 1966). Für das Verständnis dieses Phänomens dürfte der Befund nicht unwesentlich sein, daß auf blankem Eisenblech eine vergleichbare Haftung nicht eintritt. Man wird daher die Ursache für die Haftverbesserung einerseits bei Reaktionen am PVC - dort ist z.B. HCl-Abspaltung bekannt - andererseits bei der Reaktion mit polaren Gruppen des Kataphoresegrunds zu suchen haben.

Haftungsprobleme insbesondere an metallischen Oberflächen treten auch bei PAMA-Plastisolen auf und es bestand demzufolge die Aufgabe, die Haftfestigkeit dieser Klasse von Plastisolen zu verbessern. Allerdings war angesichts der so bedeutenden Unterschiede hinsichtlich Struktur und Reaktivität von PVC einerseits

und PAMA andererseits ein paralleles Verhalten nur in sehr beschränktem Umfang zu erwarten. Wenn also die haftvermittelnde Wirkung von Polyamidharzen auf spezifische Wechselwirkungen mit dem PVC zurück ging, so konnten daraus keinerlei Erwartungen auf eine entsprechende Wirkung bei PAMA hergeleitet werden. Tatsächlich ergab die experimentelle Überprüfung, daß sich durch Anwendung von Polyaminoamiden die sich bei PVC als so wirksam erwiesen hatten bei den üblichen für PAMA-Plastisole eingesetzten Polymerisatpulvern keinerlei Haftverbesserung auf Kataphoreseblechen erzielen läßt.

Es wurde nun gefunden, daß überraschenderweise auch für Plastisole auf PAMA-Basis mit Polyamidharzen als Haftvermittlern eine wesentlich verbesserte Haftung auf kataphoretisch vorbehandelten Metalloberflächen erreicht werden kann, wenn die Poly(meth)acrylatkomponente der Plastisole durch Carboxylgruppen funktionalisiert wurde.

Die Erfindung betrifft somit Plastisol-Systeme mit verbesserter Haftung auf Kataphoreseblechen auf Basis von Polyalkyl(meth)acrylaten, enthaltend gegebenenfalls neben carboxylgruppenfreien Polyalkyl(meth)acrylaten P als gelierfähige Massen Copolymerisate CP mit einer Glastemperatur Tg oberhalb 35 Grad C, mit einem Polymerisationsgrad von mehr als 400, und einer durchschnittlichen Korngröße von 0,05 bis 500 $\mu$m, die aus Methylmethacrylat sowie 0,1 bis 10 Gew.-% (bezogen auf die Gesamtheit der Monomeren mindestens eines carboxylgruppenhaltigen Monomeren der Formel I

R - COOH I

worin
R für einen Rest

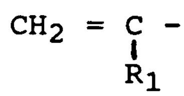

wobei $R_1$ Wasserstoff oder Methyl bedeutet oder für einen Rest

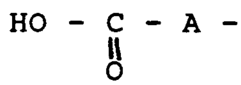

wobei A einen mindestens eine zur Carboxylgruppe $\alpha$-ständige Doppelbindung enthaltendem Kohlenwasserstoffrest mit 2 bis 12 Kohlenstoffatomen darstellt, und/oder eines Anhydrids der Formel IA

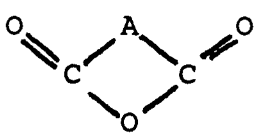

IA

aufgebaut ist gemeinsam mit 2,5 bis 10 Gew.-% (bezogen auf das Copolymerisat CP) an einem oder mehreren Polyamidharzen PAA zusammen mit 100 - 1 000 Gewichtsteilen bezogen auf 100 Gew.-Teile des Copolymerisats CP eines mit den Copolymerisaten verträglichen, organischen Weichmachers und gegebenenfalls bis zu 700 Gew.Teilen inerter Füllstoffe sowie gegebenenfalls weitere, übliche Zusätze.

Die Copolymerisate CP

Als carboxylgruppenhaltige Monomere der Formel I, die erfindungsgemäß neben Methylmethacrylat und gegebenenfalls weiteren mit den Plastisoleigenschaften zu vereinbarenden Monomeren zur Anwendung kommen, seien die Acryl- und insbesondere die Methacrylsäure, die Maleinsäure, die Fumarsäure und speziell die Itaconsäure genannt. Als Monomer der Formel IA sei das Maleinsäureanhydrid genannt, welches unter der Einwirkung von Wasser durch Hydrolyse ebenfalls Carboxylgruppen zu bilden vermag. Definitionsgemäß beträgt der Anteil der carboxylgruppenhaltigen Monomeren in den Copolymerisaten CP 0,1 bis 10 Gew.-% vorzugsweise 0,5 bis 7,5 Gew.-% insbesondere 1 bis 5 Gew.-% speziell 2 ± 1 Gew.-%. Als Comonomere neben MMA und den carboxylgruppenhaltigen Monomeren der Formel I bzw. IA kommen

noch weitere, einschlägig verwendete Comonomere, insbesondere (Meth)acrylsäureester, soweit sie sich mit den vorgegebenen Spezifikationen z.B. hinsichtlich Tg vereinbaren lassen infrage, wobei deren Anteil in der Regel von 0 bis 60 Gew.-% falls vorhanden im allgemeinen im Bereich 2 bis 50, insbesondere (30 ± 5) Gew.-% (bezogen auf CP) liegt. Diese gehorchen im allgemeinen der Formel II

$$CH_2 = \overset{R_1'}{\overset{|}{C}} - COOR_2 \qquad \text{II}$$

worin
- $R_1'$ für Wasserstoff oder Methyl
- $R_2$ für einen Alkylrest oder Cycloalkylrest mit 1 bis 12, insbesondere 1 bis 8 Kohlenstoffatomen, die gegebenenfalls verzweigt sein können

steht, mit der Maßgabe daß $R_1'$ und $R_2$ nicht gleichzeitig Methyl bedeuten sollen. Genannt sei z.B. das Butylacrylat, Butylmethacrylat, das Ethylhexylmethacrylat.
Gegebenenfalls können die Copolymerisate CP noch stickstoffhaltige oder hydroxylgruppenhaltige bzw. alkoxygruppenhaltige polymerisationsfähige Einheiten HM enthalten in der Regel in Anteilen von 0,05 bis 5, vorzugsweise 0,1 bis 3 Gew.-% bezogen auf die Copolymerisate CP. Diese gehören vorzugsweise der Monomerklasse der stickstoffhaltigen Vinylheterocyclen mit vorzugsweise 5-Ringen neben 6-Ringen, und/oder der Hydroxyalkyl-, Alkoxyalkyl- und der aminoalkylsubstituierten Ester oder Amiden der Acryl- und Methacrylsäure an.

Als Stickstoff-heterocyclische Monomere HM seien insbesondere solche aus der Klasse der Vinylimidazole, der Vinyllactame, der Vinylcarbazole und der Vinylpyridine genannt.

Beispiele, die keinerlei Beschränkung darstellen sollen, für diese monomeren Imidazolverbindungen sind N-Vinylimidazol (auch Vinyl-1-imidazol genannt), N-Vinyl-methyl-2-imidazol, N-Vinyl-äthyl-2-imidazol, N-Vinyl-phenyl-2-imidazol, N-Vinyl-dimethyl-2,4-imidazol, N-Vinyl-benzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinyläthyl-5-pyrrolidon, N-Vinyldimethyl-5-5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allyl-caprolactam, N-Vinylcapryllactam.

Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen) carbazol.

Ferner seien die folgenden hydroxy- bzw. alkoxysubstituierten Alkylester der (Meth)acrylsäure angeführt:
2-Hydroxyethyl(meth)acrylat, Hydroxypropyl(meth)acrylat, 2-Methoxyethyl(meth)acrylat, 2-Ethoxyethyl-(meth)acrylat, 2-Butoxyethyl(meth)acrylat, 2-(2-Butoxyethoxy)ethyl-acrylat, 2-(Ethoxyethyloxy)ethyl(meth)-acrylat, 4-Hydroxybutyl(meth)acrylat, 2-[2-(2-Ethoxyethoxy)ethoxy]ethyl(meth)acrylat, 3-Methoxybutyl-1-(meth)acrylat, 2-Alkoxy-methylethyl(meth)acrylat, 2-Hexoxyethyl(meth)acrylat.

Weiterhin seien die folgenden aminsubsitutierten Alkylester der (Meth)acrylsäure genannt.

2-Dimethylaminoethyl(meth)acrylat, 2-Diethylaminoethyl(meth)acrylat, 3-Dimethylamino-2,2-dimethylpropyl-1-(meth)acrylat, 3-Diethylamino-2,2-dimethylpropyl-1-(meth)acrylat, 2-Morpholinoethyl(meth)-acrylat, 2-tert.-Butylaminoethyl(meth)acrylat, 3-(Dimethyl-amino)propyl(meth)acrylat, 2-(Dimethylaminoethoxyethyl)(meth)acrylat.

Als Vertreter der (Meth)acrylamide seien beispielsweise die folgenden Monomeren genannt:
N-Methyl(meth)acrylamid, N-Dimethylaminoethyl-(meth)acrylamid, N-Dimethylaminopropyl(meth)acrylamid, N-Isopropyl(meth)acrylamid, N-tert.Butyl(meth)acrylamid, N-Isobutyl(meth)acrylamid, N-Decyl(meth)-acrylamid, N-Cyclohexyl(meth)acrylamid, N-[3-(Dimethylamino)-2,2-dimethylpropyl]-methacrylamid, N-Dodecyl(meth)acrylamid, N-[3-Dimethylaminopropy](meth)acrylamid, N-[2-Hydroxyethyl](meth)acrylamid.

Im allgemeinen liegt das Molgewicht Mw der Copolymerisate CP im Bereich 100 000 bis 500 000 vorzugsweise 150 000 bis 300 000 Dalton. (Bestimmung nach H.F. Mark et al. Encyclopedia of Polymer Science and Engineering, 2nd Ed. Vol. 10, 1 - 18, J. Wiley 1987).

Die Herstellung der Polymerisate $\overline{CP}$ kann in an sich bekannter Weise erfolgen, beispielsweise durch Emulsionspolymerisation oder Suspensionspolymerisation (vgl. H. Rauch-Puntigam, Th. Völker, Acryl- und Methacrylverbindungen, Springer Verlag 1968). Bei Anwendung der Emulsionspolymerisation kann vorteilhaft nach dem Emulsions- oder Monomerzulaufverfahren gearbeitet werden, wobei ein Teil des Wassers sowie die Gesamtmenge oder Anteile des Initiators und des Emulgators vorgelegt werden. Die Teilchengröße läßt sich bei diesen Verfahren mit Vorteil durch die Menge des vorgelegten Emulgators steuern. Als Emulgatoren sind vor allem anionische und nichtionische Tenside verwendbar. Im allgemeinen wird die verwendete Emulgatormenge - bezogen auf das Polymerisat - 1 Gew.-% nicht überschreiten.
Als Initiator können neben den in der Emulsionspolymerisation üblichen Verbindungen, wie z.B. Perverbindungen wie Wasserstoffperoxid, Ammoniumperoxidisulfat (APS) auch Redoxsysteme wie Bisulfit-APS-Eisen sowie Azo-Starter verwendet werden. Die Initiatormenge liegt im allgemeinen bei 0,005 bis 0,5 Gew.-%, bezogen auf das Polymerisat.

Die Polymerisationstemperatur richtet sich innerhalb gewisser Grenzen nach den Initiatoren. So arbeitet man bei Anwendung von APS vorteilhaft im Bereich von 60 - 90 Grad C. Bei Einsatz von Redoxsystemen kann auch bei tieferen Temperaturen, beispielsweise bei 30 Grad c polymerisiert werden. Neben Zulaufpolymerisation kann auch nach dem Verfahren der Batch-Polymerisation gearbeitet werden. Dabei wird die Gesamtmenge bzw. ein Anteil der Monomeren mit allen Hilfsstoffen vorgelegt und die Polymerisation mit Hilfe von Redox-Initiatoren gestartet. Das Monomer-Wasser-Verhältnis muß dabei der freiwerdenden Reaktionswärme angepaßt werden. In der Regel treten keine Schwierigkeiten auf, wenn man eine 50 %-ige Emulsion so erzeugt, daß man zunächst die Häfte der Monomeren und der Hilfsstoffe in der Gesamtmenge des Wassers emulgiert und dann bei Raumtemperatur die Polymerisation auslöst und nach erfolgter Reaktion den Ansatz abkühlt und die verbleibende Häfte der Monomeren zusammen mit den Hilfsstoffen zusetzt.
Die Gewinnung der Polymerisate in fester Form kann in an sich bekannter Weise durch Sprühtrocknung, Gefriertrocknung oder durch Ausfällen vorgenommen werden. Unter Umständen kann es vorteilhaft sein, die einzelnen Latexteilchen beim Trocknen miteinander zu größeren Einheiten zu verkleben (partielle Verglasung). Als Richtwert für die agglomerierten Einheiten kann man 5 - 200 $\mu$ annehmen.

Die erfindungsgemäß einzusetzenden Polymerisate CP können auch nach dem Verfahren der Perlpolymerisation hergestellt werden. Dabei können die üblichen Dispergiermittel und die gebräuchlichen Kessel (drucklos oder unter Anwendung von Druck) zur Anwendung kommen (vgl. Houben-Weyl, 4. Auflage, Bd. XIV, Seite 406 ff, und S. 1053ff, Georg Thieme-Verlag). Aus Gründen des besseren Anquellens werden Perlpolymerisate mit einem Teilchendurchmesser deutlich kleiner als 100 $\mu$ bevorzugt.

Weiter können die erfindungsgemäß einzusetzenden Copolymerisate CP auch als Kern-Schale-Polymerisate in Anlehnung an die DE-C 27 22 752 bzw. die US-A 4 199 486 hergestellt werden. Kernpolymerisat und Schalenpolymerisat stehen dabei vorzugsweise im Gewichtsverhältnis 3 : 1 bis 1 : 3.

Grundsätzlich eignen sich die vorstehend angegebenen Monomeren der Formeln I bzw. IA und Methylmethacrylat sowie die (Meth)acrylsäureester MA und gegebenenfalls auch die Monomeren HM auch zur Herstellung der Kern-Schale-Polymerisate.
Dabei ist die Schale in der Regel ganz überwiegend aus MMA aufgebaut, beispielsweise zu mindestens 80 Gew.-%, vorzugsweise zu mindestens 96 Gew.-% (bezogen auf die Schale, insbesondere zu 97,5 ± 0,5 Gew.-%, und zu 2 - 3 Gew.-% aus den Monomeren der Formeln I bzw. IA und im übrigen aus Monomeren HM. Das Kernmaterial enthält außer MMA noch Monomere der Formeln I bzw. IA ebenfalls in Mengen von 2 - 3 Gew.-%, vor allem aber Monomere der Formel II in Anteilen von bis zu 60 Gew.-% insbesondere 50 ± 10 Gew.-% (bezogen auf das Kernmaterial). Genannt sei beispielsweise das Butyl(meth)acrylat.

Der Aufbau der Copolymerisate CP aus einem Kernmaterial und einem Schalenmaterial wird in an sich bekannter Weise durch eine bestimmte Verfahrensweise bei der Emulsionspolymerisation erhalten. Dabei werden die das Kernmaterial bildenden Monomeren in wäßriger Emulsion in der ersten Verfahrensstufe polymerisiert. Wenn die Monomeren der ersten Stufe im wesentlichen auspolymerisiert sind, werden die Monomerbestandteile des Schalenmaterials unter solchen Bedingungen zu dem Emulisonspolymerisat zugegeben, daß die Bildung neuer Teilchen vermieden wird. Dadurch wird das in der zweiten Stufe entstehende Polymerisat schalenförmig um das Kernmaterial herum gelagert. Durch geeignete Wahl der Emulgiermittelmenge kann die Teilchengröße in dem Sinne beeinflußt werden, daß die Teilchen um so größer werden, je kleiner die Emulgiermittelmenge ist. Die Teilchendurchmesser können z.B. im Bereich von 0,05 bis 5 $\mu$m liegen.
In der ersten Polymerisationsstufe, in der das Kernmaterial entsteht, werden 0,01 bis 1 Gew.-%, bezogen auf die Wasserphase an anionischen, kationischen oder nicht-ionischen Emulgiermitteln, wie Natriumlaurylsulfat, Alkylbenzolsulfonate, Oxäthylierungsprodukte alkylierter Phenole oder deren neutralisierte Sulfierungsprodukte, verwendet. Die Polymerisation wird vorzugsweise bei Temperaturen zwischen 60 und 100 Grad C mit Hilfe wasserlöslicher Radikalbildner, wie Kalium- oder Ammoniumpersulfat oder Wasserstoffperoxyd, ausgelöst. Vor Beginn der zweiten Polymerisationsstufe kann erneut Initiator zugesetzt werden, jedoch wird wenig oder gar kein zusätzliches Emulgiermittel in der zweiten Stufe verwendet.

Zur Überführung der erhaltenen, meist 30- bis 60-%igen Dispersion in ein trockenes Pulver werden die Dispersionen in an sich bekannter Weise durch Eintrocknen dünner Schichten in flachen Behältern oder auf Walzen oder vorzugsweise durch Sprühtrocknung getrocknet.
Die Sprühtrocknung der Dispersionen kann in bekannter Weise erfolgen. Großtechnisch werden sogenannte Sprühtürme verwendet, die üblicherweise im Gleichstrom mit der eingesprühten Dispersion von oben nach unten mit Heißluft durchströmt werden. Die Dispersion wird durch eine oder viele Düsen versprüht oder bevorzugt mittels einer schnell rotierenden Lochscheibe zerstäubt. Die eintretende Heißluft hat eine Temperatur von 100 bis 250, vorzugsweise von 150 - 250 Grad C. Für die Eigenschaften des sprühgetrockneten Emulsionspolymerisats ist die Austrittstemperatur der Luft entscheidend, d.h. die Temperatur, bei der die getrockneten Pulverkörnchen am Fuß des Sprühturms oder in einem Zyklonabscheider von dem Luftstrom getrennt werden. Diese Temperatur soll möglichst unter der Temperatur liegen, bei der das Emulsionspolymerisat sintern oder schmelzen würde. In vielen Fällen ist eine Austrittstemperatur von 50 - 90 Grad C gut geeignet.
Die Austrittstemperatur läßt sich bei konstantem Luftstrom durch Variation der kontinuierlich je Zeiteinheit eingesprühten Dispersionsmenge regeln.

Die durch Sprühtrocknung der Polymerdispersion gewonnenen Copolymerisate CP weisen eine Primärteilchengröße im Bereich 0,1 bis 5 µm auf. (Bestimmung nach Ullmanns Encyclopädie der techn. Chemie 4. Auflage, Bd. 5, S. 725 - 752; Die Korngrößenverteilung kann durch Messung der Lichtextinktion einer durch die Meßzelle eines Meßgeräts ("Kratel Partoskop F" der Kratel GmbH, Göttingen) strömenden Suspension der Teilchen in Wasser bestimmt werden. Eine sekundär erfolgende Aggregation der Primärteilchen kann zu Agglomeraten im Größenbereich 5 - 100 µm führen, die aber gleichfalls im Sinne der vorliegenden Erfindung verwendbar sind.

Als besonders geeignete Ausführungsformen der Copolymerisate CP seien genannt:

| | |
|---|---|
| Copolymerisat CP-I : | Emulsionspolymerisate aus 98 Gew.-MMA und 2 Gew.-Teile Itaconsäure, Sprühgetrocknet |
| Plastisol: | Mit 2 Gew.-% Diisononylphthalat plastifiziert |
| Copolymerisat CP-II: | Kern-Schale-Polymerisat mit Kern aus 48 Gew.-% MMA; 50 Gew.-% Butylmethacrylat, 2 Gew.-% Itaconsäure; Schale aus 98 Gew.-% MMA; 2 Gew.-% Itaconsäure |
| Copolymerisat CP-III | Kern-Schale-Polymerisat mit Kern wie in CP-II, Schale aus 100 Gew.-% MMA |
| Copolymerisat CP-IV | Kern-Schale-Polymerisat mit Kern aus 47,5 Gew.-% MMA; 50 Gew.-% Butylmethacrylat, 2,5 Gew.-% Methacrylsäure Schale aus 97,5 Gew.-% MMA, 2,5 Gew.-% Methacrylsäure |

Zum Vergleich lassen sich beispielsweise heranziehen:

| | |
|---|---|
| Polymerisat VE-I | Emulsionspolymerisat aus 100 Gew.-% MMA (Produkt PLEXIGUM®M 914 der Röhm GmbH) |
| Copolymerisat VE-II | Emulsionspolymerisat aus 98 Gew.-% MMA und 2 Gew.-% N-Vinylimidazol |
| Copolymerisat VE-III | Kern-Schale-Polymerisat, mit Bruttozusammensetzung 74 Gew.-% MMA, 21 Gew.-% Butylmethacrylat, 1 Gew.-% N-Vinylimidazol |

Die Polyamidharze PAA

Die Polyamidharze (Polyaminoamide bzw. Polyaminoimidazoline) PAA die gemäß vorliegender Erfindung zur Anwendung kommen, sind diejenigen des Standes der Technik (s. Stand der Technik). Ein Herstellungsverfahren bedient sich der Kondensation von verzweigten Dicarbonsäuren auf Basis ungesättigter Fettsäuren, vorwiegend natürlichen Ursprungs mit Di- bzw. Polyaminen.
Als wichtigste Vertreter der Dicarbonsäuren sind die Polymerisationsprodukte natürlicher, einfach oder mehrfach ungesättigter Fettsäuren, insbesondere solcher mit 18 C-Atomen zu nennen. Speziell als Rohstoffe eingesetzt werden die Öl-, die Linol- und die Linolensäure.
Additionsreaktion derartiger Ungesättigter Fettsäuren z.B. zu Dimeren werden an Katalysatoren auf Ton-Basis oder Fullererde und in Gegenwart von Alkali- bzw. Erdalkalisalzen zweckmäßig zwischen 200 und 270 Grad C durchgeführt, wobei teilweise Dehydrierung und Isomerisierung eintritt. Durch katalytische Hydrierung kann man zu besonders oxidationsstabilen Polyaminoamiden kommen (DE-C 11 34 666, DE-C 11 34 667, DE-A 12 80 852, DE-A 14 43 938, DE-B 14 43 968).
Die Kondensation wird im allgemeinen mit Polyaminen der Struktur $H_2N\text{-}(CH_2)_x\text{-}[NH\text{-}(CH_2)_x]_y\text{-}NH_2$ mit x = 2 - 6 und y = 0 - 3 bei Temperaturen von ca. 200 - 250 Grad C vorgenommen. Bei einer bestimmten Ausführungsart der erfindungsgemäß einzusetzenden Polyamidharze PAA setzt man vorzugsweise polymere Fettsäuren mit Polyalkylenpolyaminen wie z.B. Diethylentriamin oder Triethylentetramin bei den genannten Temperaturen um, wobei überwiegend Polyaminoamide mit freien Aminogruppen erhalten werden. Geht man über die Temperaturgrenze von 280 Grad C bis zu ca. 280 Grad C so werden unter Wasserabspaltung und Ringschluß aus den Polyaminoamiden Polyaminoimidazoline gebildet, die ebenfalls im Sinne der vorliegenden Erfindung dienen können. Als Richtwerte für die Spezifikationen für vorteilhaft einsetzbare Polyaminoamide seien eine Viskosität von 300 - 900 mPa.s (bei 75 Grad C) und Aminzahlen von 340 - 410 angegeben. Genannt sei beispielsweise das Produkt VERSAMID® 125 (mit 700 - 900 mPa.s/75 Grad C, Aminzahl 345 - 370) und das Produkt VERSAMID® 140 (mit 300 - 600 mPa.s/75 Grad C; Aminzahl 370 - 410), beides Produkte der Schering AG.

Polyaminoimidazoline mit einer Viskosität von 50 - 400 bzw. 200 - 400 mPa.s und einer Aminzahl von 320 - 400 bzw. 470 - 510 sind unter dem Warenzeichen EUREDUR®350 bzw. EUREDUR® 370 im Handel (Produkt der Fa. Schering). Weiter werden erfindungsgemäß brauchbare Polyaminoamide desselben Herstellers unter dem Warenzeichen EURETEK® (z.B. EURETEK® 505) angeboten.

Die Polyaminoamide PPA können nach Art von Haftungsvermittlern auf den mit Plastisol zu beschichtenden Oberflächen aufgebracht werden, vorzugsweise werden sie jedoch im Gemisch mit den Copolymerisaten CP, den Weichmachern und ggfls. weiteren, üblichen Plastisol-Bestandteilen eingesetzt.

Die erfindungsgemäßen Plastisol-Systeme enthalten zur Anwendung in Plastisolen an sich bekannte Weichmacher W in den dafür üblichen Mengen, beispielsweise die für PAMA-Plastisole (aber auch für PVC-Plastisole) üblichen Weichmacher, insbesondere Phthalsäureester, daneben Adipinsäure- und/oder Sebacinsäureester, chlorierte Paraffine, Trialkylphosphate, aliphatische oder araliphatische Polyester sowie sonstige polymere Weichmacher wie z.B. Harnstoffweichharze. (Vgl. H.K. Felger, Kunststoff-Handbuch Bd. 1/1C, Hanser-Verlag 1985 sowie in H.F. Mark et al. Encyclopedia of Polymer Science and Engineering, Supplemental Volume pg. 568 - 647, J. Wiley 1989). Eine Auswahl geeigneter Weichmacher kann auch der DE-C 25 43 542 entnommen werden. Vorzugsweise kommen Weichmacher bzw. Weichmacherkombinationen infrage, die bei einer Lagerzeit der konfektionierten Plastisole über 3 Wochen bei 30 Grad C einen Viskoitätsanstieg unter dem zehnfachen, speziell unter dem fünffachen Wert der Ausgangsviskosität ergeben.

Besonders erwähnt seien das Diisodecylphthalat, Diethylhexylphthalat, Di-$C_7$-$C_{11}$-n-alkylphthalat, Dioctylphthalat, Trikresylphosphat, Dibenzyltoluol (LIPINOL ® T, Produkt der Fa. Hüls AG) und Benzyloctylphthalat.

Wie bereits vorstehend ausgeführt wurde, kommen die Weichmacher in Anteilen von 5 bis 200 Gew.-Teilen, auf 100 Gew.-Teile des Copolymerisats CP zur Anwendung, in Anpassung an die rheologischen Anforderungen insbesondere beim Auftrag der Plastisole.

Weiter enthalten die Plastisole gewöhnlich noch anorganische Füllstoffe in Mengen bis zu 700 Gew.-Teilen. Genannt seien beispielsweise Calciumcarbonat (Kreide), Titandioxid, Calciumoxid, gefällte und gecoatete Kreiden als rheologisch wirksame Additive, ferner gegebenenfalls Thixotropierungsmittel wie z.B. pyrogene Kieselsäure.

Die Plastisole können anwendungsbedingt noch an sich bekannte Hilfsstoffe wie Haftvermittler, Netzmittel, Stabilisatoren, Verlaufsmittel, Treibmittel in Anteilen von 0 bis 5 Gew.-% (bezogen auf die Plastisole) enthalten.

Erwähnt seien z.B. Calciumstearat als Verlaufsmittel.

Herstellung der Plastisole

Prinzipiell kann die Mischung der Komponenten für die erfindungsgemäßen Plastisole mit verschiedenartigen Mischern vorgenommen werden. Im Einklang mit den Erfahrungen bei PVC- und PAMA-Plastisolen werden jedoch langsam laufende Planeten-Rührwerke, Hochgeschwindigkeits-Mischer bzw. Dissolver, Horizontal-Turbomischer und Dreiwalzenwerke bevorzugt; wobei die Wahl von der Viskosität der erzeugten Plastisole beeinflußt wird.

Die Polyaminoamide PAA können als Haftvermittler, vorzugsweise aber in Abmischung in den Plastisolen eingesetzt werden.

(Vgl. H.F. Mark et al., Encyclopedia of Polymer Science and Engineering 2nd Ed. Vol. 17, 365 - 866 J. Wiley 1989).

Gemischt wird, bis Homogenisierung der Plastisol-Masse eingetreten ist.

Die Plastisol-Masse kann in Schichtstärken von 1 - 5 mm bei Temperaturen von 100 - 200 Grad C innerhalb von 30 bis 2 Minuten geliert werden.

Anwendung der Plastisole

Bevorzugt werden als Auftragungsmodus für die Beschichtung von Metallteilen derzeit Spritzverfahren, z.B. Pastenspritzverfahren. Dabei wird das Plastisol gewöhnlich mit hohen Drücken (ca. 300 - 400 bar) über airless-Spritzpistolen verarbeitet. Im besonders wichtigen Anwendungsbereich Automobilherstellung/Unterbodenschutz wird gewöhnlich so verfahren, daß nach der Elektrotauchlackierung der Karosserie und erfolgter Trocknung das Plastisol über airless-Spritzpistolen aufgetragen wird. Die thermische Härtung geschieht gewöhnlich in einem Heizofen (Umluft- oder Strahlerofen) bei üblichen Verweilzeiten - abhängig von der Temperatur - im Bereich 10 - 35 Minuten und Temperaturen zwischen 120 und 190 Grad C, vorzugsweise 140 - 180 Grad C.
Die kataphoretische Beschichtung von metallischen Substraten ist vielfach beschrieben worden (vgl. DE-A 27 51 498, DE-A 27 53 861, DE-A 27 32 736, DE-A 27 33 188, DE-A 28 33 786).

Vorteilhafte Wirkungen

Die erfindungsgemäßen Plastisol-Systeme enthaltend die Carboxylgruppen-haltigen Copolymerisate CP zusammen mit Polyaminoamiden PA zeigen überraschenderweise eine gute bis sehr gute Haftung auf metallischen Untergründen, insbesondere auf Kataphoreseblechen.

Die folgenden Beispiele dienen zur Erläuterung der Erfindung, wobei folgende Daten gelten:

| | |
|---|---|
| Copolymerisat CP-I | Tg = 78 Grad C |
| Polymerisationsgrad | ca. 5 500 |
| Copolymerisat CP-II | Tg Schale = ca. 82 Grad C Kern = ca. 70 Grad C |
| Polymerisationsgrad | ca. 6 000 |
| Copolymerisat CP-III | Tg = ca. 90 Grad C |
| Polymerisationsgrad | ca. 7 200 |
| Copolymerisat CP-IV | Tg Schale = ca. 90 Grad C Tg Kern ca. 78 Grad C |
| Polymerisationsgrad | ca. 5 800 |
| Copolymerisat VE-I | Tg = ca. 106 Grad C |
| Polymerisationsgrad | ca. 5 200 |
| Copolymerisat VE-II | Tg = ca. 98 Grad C |
| Polymerisationsgrad | ca. 6 300 |
| Copolymerisat VE-III | Tg Kern = ca. 71 Grad C Tg Schale ca. 90 Grad C |
| Polymerisationsgrad | ca. 6 000 |

BEISPIELE

a) Formulierung und Anwendung der Plastisol-Systeme

**1. Formulierung mit dem Copolymerisat-System CP-I**

25 Gew.-Teile eines Emulsionspolymerisats aus 98 Gew.-% MMA und 2 Gew.-Teilen Itaconsäure das als sprühgetrocknetes Produkt vorliegt (Produkt PLEX $^{R}$ 4944 F der Röhm GmbH) werden mit 30 Gew.-Teilen Benzyloctylphthalat (Produkt SANCTICIZER $^{R}$ 261 der Fa. Monsanto), 30 Gew.-Teilen Calciumcarbonat (Produkt OMYA BS der Fa. Ulmer Füllstoff-Werke, 7906 Blaustein) und 1,5 Gew.-Teilen eines mittelviskosen Polyaminoamids mit Viskosität 700 - 900 mPa-s bei 75 Grad C und einer Aminzahl von 345 - 370 (Produkt VERSAMID $^{R}$ 125 der Schering AG) bei Raumtemperatur einmal über den Walzenstuhl gegeben.
Es resultiert ein gefülltes Plastisol.
In üblicher Weise aufgetragen und bei 180 Grad C über 10 Minuten bzw. bei 140 Grad C über 30 Minuten eingebrannt haften die Plastisol-Systeme auf kataphoretisch grundierten Blechen (Fa. PPG) unter Einbrennbedingungen von 180 Grad C über 10 Minuten auch auf dem blanken Eisenblech.
Analog der obigen Formulierung kann bei sonst identischer Formulierung auch ein Polyaminoimidazolin mit einer Viskosität von 300 - 600 mPa.s bei 75 Grad C und einer Aminzahl von 370 bis 410 (Produkt VERSAMID $^{R}$ 140 der Schering AG) mit gleich gutem Erfolg eingesetzt werden.

Ebenfalls mit gutem Erfolg läßt sich das Produkt PLEX $^{R}$ 6621-0 der Röhm GmbH einsetzen.

**2. Formulierung mit dem Copolymerisat-System CP-II**

25 Gew.-Teile eines Kern-Schale-Polymerisats aus 48 Gew.-% MMA, 50 Gew.-% Butylmethacrylat und 2 Gew.-% Itaconsäure im Kern und 98 Gew.-% MMA und 2 Gew.-% Itaconsäure in der Schale werden mit 30 Gew.-Teilen Dioctylphosphat, 30 Gew.-Teilen Calciumcarbonat (Produkt OMYA BS) und 1,5 Gew.-Teilen eines Polyaminoimidazolins (Produkt EURETEK 505 der Schering AG) bei Raumtemperatur einmal über den Walzenstuhl gegeben.
Es resultiert ein gefülltes Plastisol.
In üblicher Weise aufgetragen wird es

- bei 180 Grad C über 10 Minuten
- bei 140 Grad C über 30 Minuten
- bei 120 Grad C über 30 Minuten

auf Kataphoreseblechen eingebrannt. Die Ergebnisse in Bezug auf die Haftung sind in Tabelle 1 wiedergegeben.

Analog der obigen Formulierung wurden auch die folgenden Copolymerisat-Systeme formuliert.

**3. Formulierung mit dem Copolymerisat-System CP-III**

25 Gew.-Teile eines Kern-Schale-Polymerisats. Kern wie in CP-II, Schale aus 100 Gew.-% MMA; Rest wie in CP-II (Ergebnisse in Bezug auf Haftung s. Tab. 1).

**4. Formulierung mit dem Copolymerisat-System CP-IV**

25 Gew.-Teile eines Kern-Schale-Polymerisats mit Kern aus 47,5 Gew.-% MMA, 50 Gew.-% Butylmethacrylat, 2,5 Gew.-% Methacrylsäure, Schale aus 97,5 Gew.-% MMA; 2,5 Gew.-% Methacrylsäure, Rest wie in CP-II (Ergebnisse in Bezug auf Haftung s. Tab. 1).

In die folgende Tabelle 1 wurden die Ergebnisse mit den Vergleichsprodukten VE-I, VE-II und VE-II, in Formulierungen völlig analog CP-II im Beispiel 2 aufgenommen.

Tabelle 1

| Plastisol aus Polymer CP bzw.VE | Polyamidharzgehalt PAA in % | Einbrennbedingungen 10' 180° Kataphoreseblech (PPG) | Einbrennbedingungen 30' 140° Kataphoreseblech (PPG) |
|---|---|---|---|
| VE-I | ohne | o* | o |
| | 1,5 | o | o |
| | 3,0 | o | o |
| CP-I | ohne | o | o |
| | 1,5 | + | + |
| VE-III | ohne | o | o |
| | 1,5 | o | o |
| CP-II | ohne | o | o |
| | 1,5 | + | + |
| CP-III | ohne | o | o |
| | 1,5 | + | + |
| CP-IV | 1,5 | + | + |
| VE-II | ohne | o | o |
| | 1,5 | o | o |
| | 3,0 | o | o |

* o = keine Haftung
\+ = ausreichende Haftung

## Patentansprüche

1. Plastisolsysteme mit verbesserter Haftung auf Kataphoreseblech auf Basis von Polyalkyl(meth)-acrylaten,

   dadurch gekennzeichnet,

   daß sie als gelierfähige Massen Copolymerisate CP mit einer Glastemperatur Tg oberhalb 35 Grad C, mit einem Polymerisationsgrad von mehr als 400, und einer durchschnittlichen Korngröße von 0,05 bis

500 µm, die aus Methylmethacrylat sowie 0,1 bis 10 Gew.-% (bezogen auf die Gesamtheit der Monomeren) mindestens eines carboxylgruppenhaltigen Monomeren der Formel I

R - COOH    I

worin
R    für einen Rest

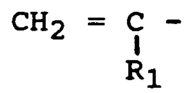

wobei $R_1$ Wasserstoff oder Methyl bedeutet oder für einen Rest

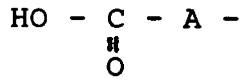

wobei A einen mindestens eine zur Carboxylgruppe α-ständige Doppelbindung enthaltendem Kohlenwasserstoffrest mit 2 bis 12 Kohlenstoffatomen darstellt, und/oder eines Anhydrids der Formel IA

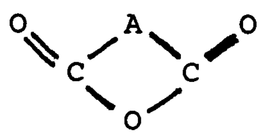

IA

aufgebaut sind,
gemeinsam mit 2,5 bis 10 Gew.-% (bezogen auf das Copolymerisat CP) an einem oder mehreren Polyamidharzen PAA zusammen mit 100 - 1 000 Gew.-Teilen bezogen auf 100 Gew.-Teile des Copolymerisats CP eines mit den Copolymerisaten verträglichen, organischen Weichmachers W und gegebenenfalls bis zu 700 Gew.-Teilen inerter Füllstoffe sowie gegebenenfalls weitere, übliche Zusätze, enthalten.

**2.** Plastisolsysteme gemäß Anspruch 1, dadurch gekennzeichnet, daß die Monomeren der Formel I ausgewählt sind aus der Gruppe bestehend aus Acrylsäure, Methacrylsäure und Itaconsäure.

**3.** Plastisolsysteme gemäß den Ansprüchen 1 und 2, dadurch gekennzeichnet, daß die Copolymerisate CP außer Methylmethacrylat und den Monomeren der Formeln I oder IA noch Monomere der Formel II

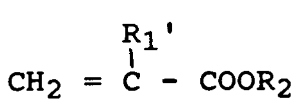

II

worin
$R_1'$    für Wasserstoff oder Methyl
$R_2$    für einen Alkylrest oder Cyclalkylrest mit 1 bis 12, insbesondere 1 bis 8 Kohlenstoffatomen, die gegebenenfalls verzweigt sein können
steht, mit der Maßgabe, daß $R_1'$ und $R_2$ nicht gleichzeitig Methyl bedeuten sollen, in Anteilen von 2 bis 50 Gew.-% (bezogen auf das Gesamtpolymerisat CP) enthalten.

**4.** Plastisolsysteme gemäß den Ansprüchen 1 - 3, dadurch gekennzeichnet, daß die Copolymerisate CP als Kern-Schale-Polymerisate aufgebaut sind.